## Europäisches Patentamt

## European Patent Office

## Office européen des brevets

(19)

(11) Veröffentlichungsnummer: **0 132 548**
**B1**

(12) **EUROPÄISCHE PATENTSCHRIFT**

(45) Veröffentlichungstag der Patentschrift:
**30.03.88**

(51) Int. Cl.⁴: **B 61 L 21/04, B 61 L 19/06**

(21) Anmeldenummer: **84106310.0**

(22) Anmeldetag: **01.06.84**

(54) Einrichtung zum Betrieb eines rechnergesteuerten Stellwerkes.

(30) Priorität: **28.06.83 DE 3323269**

(43) Veröffentlichungstag der Anmeldung:
**13.02.85 Patentblatt 85/7**

(45) Bekanntmachung des Hinweises auf die Patenterteilung:
**30.03.88 Patentblatt 88/13**

(84) Benannte Vertragsstaaten:
**AT CH DE LI NL**

(56) Entgegenhaltungen:
**DE - A - 2 423 590**
**DE - A - 3 007 960**
**DE - A - 3 127 363**
**DE - B - 2 433 187**
**FR - A - 2 130 222**

**ERICSSON REVIEW, Band 59, Nr. 3, 1982, Seiten 152-157, Stockholm, SE; SIGGAARD u.a.: "Mierocomputer controlled interlocking system" ERICSSON REVIEW, Band 58, Nr. 2, 1981, Seiten 74-80, Stockholm, SE; H.S. ANDERSSON u.a.: "Computer controlled interlocking system"**

(73) Patentinhaber: **Siemens Aktiengesellschaft Berlin und München, Wittelsbacherplatz 2, D-8000 München 2 (DE)**

(72) Erfinder: **Hartkopf, Hans-Otto, Dipl.-Ing., Allensteinstrasse 15, D-3300 Braunschweig (DE)**
Erfinder: **Zillmer, Adalbert, Dipl.-Ing., Luisenstrasse 21, D-3340 Wolfenbüttel (DE)**

## Beschreibung

Die Erfindung bezieht sich auf eine Einrichtung zum Betrieb eines rechnergesteuerten Stellwerkes für eine in Teilbereiche unterteilte Bahnhofsanlage, bei dem für die Steuerung der den einzelnen Teilbereichen zugeordneten Fahrwegelemente je ein gesonderter signaltechnisch sicherer Rechner (Bereichsrechner) vorgesehen ist, dessen Programmspeicher die durch Einzel- und Fahrstrassenbeanspruchungen verlangte Bearbeitungsprogramme für alle Elementtypen beinhalten.

Ein derartiges elektronisches Stellwerk ist beispielsweise aus der DE-A 2 433 187 bekannt. Dort ist eine zu steuernde Bahnanlage in mehrere parallel zur Hauptfahrrichtung aneinandergrenzende Teilbereiche unterteilt, und jeder Teilbereich wird durch eine eigene Zentraleinheit gesteuert, welche die Stellwerksfunktion wahrnimmt.

Aus der FR-A 2 130 222 ist eine Einrichtung zur Regelung eines Verkehrssystems bekannt, bei dem den einzelnen Verzweigungspunkten eines Verkehrsnetzes Steuereinheiten zugeordnet sind, welche für jedes einzelne Fahrzeug entscheiden, über welchen Strang der Verzweigung es zum Erreichen seines jeweiligen Fahrzieles vorrücken soll. Die Steuereinheiten stehen hierzu in Verbindung mit einem zentralen Rechner, der ihnen per Programm für jedes Fahrzeug einen individuellen Laufweg vorgibt. Für den Fall, dass der zentrale Rechner ausfällt, sind die Steuereinheiten mit individuellen festen Programmen versehen, welche den zum jeweiligen Laufziel der Fahrzeuge kürzesten Laufweg vorgeben.

In einem Rechnerverbundsystem wird jede Einheit entsprechend ihrer Aufgabe und der ihr jeweils zugeordneten Prozessperipherie projektiert und programmiert. Bei dem elektronischen Stellwerk des Bereichsrechnerprinzips nach dem Oberbegriff des Patentanspruches 1 ist damit die Einzelprojektierung aller Bereichsrechner des Systems notwendig. Diese Projektierung und Programmierung jedes Einzelrechners ist beim Aufbau der Anlage, aber auch z.B. bei jedem Umbau erforderlich. Bei einem Umbau der Gleisanlage sind Eingriffe in die Hard- und Software der einzelnen Rechner erforderlich, d.h., es müssen Änderungen im Datenbestand der Festwertspeicher aller Rechner vorgenommen werden. Dies kann nur herstellerseitig geschehen; deshalb ist der Kostenaufwand für die Änderung der Speicherinhalte erheblich. Da aus Gründen der Gewährleistung der Sicherheit in der Eisenbahnsignaltechnik mit einer Änderung der Daten in den Speichern der einzelnen Bereichsrechner auch eine umfangreiche Prüfung der Speicherinhalte erforderlich ist und hierzu Zugriff zu den einzelnen Bereichsrechnern gegeben sein muss, ist die Wiederinbetriebnahme eines derartigen modularen Stellwerkes nach einer Änderung der Anlagenkonfiguration bzw. nach einer Änderung der Aufteilung der Anlage in einzelne Teilbereiche äusserst problematisch.

Aufgabe der Erfindung ist es, eine Einrichtung zum Betrieb eines rechnergesteuerten Stellwerkes der vorstehend näher gekennzeichneten Art anzugeben, die eine rasche und problemlose Inbetriebnahme des Stellwerkes bzw. Wiederinbetriebnahme nach einer Änderung der Anlagentopographie, nach einer Änderung der Bereichsaufteilung, nach Änderung elementspezifischer Daten, oder nach dem Auftreten von Störungsfällen ermöglicht, die zu einem vorübergehenden oder dauernden Abschalten eines Bereichsrechners führen.

Die Erfindung löst diese Aufgabe dadurch, dass für die anlagenspezifische Kennzeichnung der innerhalb des jeweiligen Teilbereiches zu behandelnden Fahrwegelemente die Schreib-/Lesespeicher des betreffenden Bereichsrechners vorgesehen sind und dass allen Bereichsrechnern gemeinsam ein ebenfalls signaltechnisch sicher ausgeführter Rechner (Eingaberechner) übergeordnet ist, in dessen Speichern alle bahnhofsspezifischen Daten unverlierbar gespeichert sind und der den Bereichsrechnern in einer dem Betrieb jeweils vorausgehenden Aufrüstphase die von ihm für den betreffenden Teilbereich gespeicherten anlagenspezifischen Daten übermittelt. Die einzelnen Bereichsrechner beinhalten damit vor ihrer Inbetriebnahme nur die bahnverwaltungsspezifischen und aufgabenspezifischen Element-Behandlungsprogramme. Vor der Inbetriebnahme erhalten sie keine Kenntnis über die zu steuernde Bahnhofsanlage. Die Bahnhofsanlage wird in einer Bahnhofsdatenliste im gesonderten Eingaberechner beschrieben und den einzelnen Bereichsrechnern in der Aufrüstphase mitgeteilt. Erst damit werden die Bereichsrechner funktionsfähig für die Steuerung der Bahnanlage.

Vorteilhafte Ausbildungen der erfindungsgemässen Einrichtung sind in den Unteransprüchen angegeben.

Die Verwendung eines gesonderten signaltechnisch sicheren Rechners zur Führung von Stammdaten einer Eisenbahnanlage ist zwar schon aus der DE-OS 3 127 363 bekannt. Bei dem dort offenbarten, durch mehrere Einzelrechner gesteuerten Stellwerk haben die Einzelrechner jedoch unterschiedliche Aufgaben innerhalb des Steuerungsablaufes zu erfüllen. So gibt es z.B. einen Rechner für die Kommandobehandlung, einen Rechner für die Fahrstrassenanforderung, einen Rechner für die Bildung von Fahrstrassen, einen Rechner für die Auflösung von Fahrstrassen und u.a. auch einen Rechner für die Zustandsführung. Dieser Rechner dient offenbar überwiegend Dokumentationszwecken, mindestens dient er nicht dazu, den anderen Rechnern des Rechensystemes in einer Aufrüstphase anlagenspezifische Daten zu übermitteln.

Wollte man das aus dieser DE-OS bekannte funktionsunterteilte Rechnersystem auf ein Rechnersystem übertragen, das einzelnen Teilbereichen einer Anlage zugeordnet ist, so würde dies dazu führen, dass anstelle einer Zentraleinheit für die Steuerung eines Teilbereiches für jeden Teilbereich mehrere funktionsgegliederte Rechnereinheiten vorzusehen wären. Dies würde bedeuten, dass jedem Teilbereich ein eigener Rechner für die Zustandskennzeichnung zuzuordnen wäre, somit genau die gleichen Nachteile gegeben sind, die zuvor bereits erläutert wurden.

Die Erfindung ist nachstehend anhand eines in der Zeichnung schematisch dargestellten Ausführungsbeispieles näher erläutert.

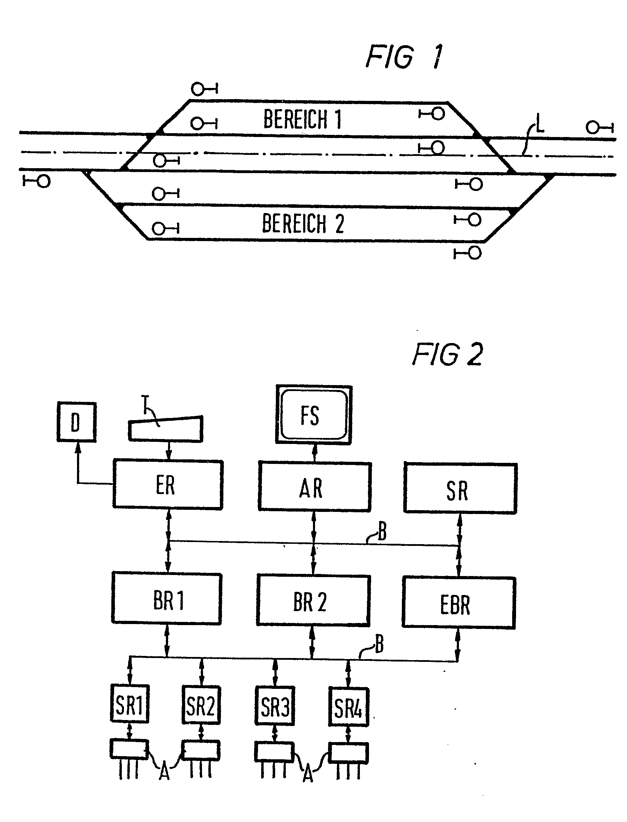

Die Zeichnung zeigt in Figur 1 einen von einem elektronischen Stellwerk zu steuernden kleinen Bahnhof und in Figur 2 den Aufbau des dafür vorgesehenen elektronischen Stellwerkes. Die in Figur 1 dargestellte Bahnhofsanlage besteht aus fünf Gleisen, sechs Weichen, zwei Doppelkreuzungsweichen, zwei Einfahr- und zehn Ausfahrsignalen. Die Bahnhofsanlage ist durch eine in Hauptfahrrichtung verlaufende strichpunktierte Linie L in zwei Teilbereiche unterteilt, von denen der in der Zeichnung obenliegende als Bereich 1 und der untenliegende als Bereich 2 ausgewiesen ist.

Für die Steuerung der Fahrwegelemente innerhalb der einzelnen Teilbereiche sind gemäss Figur 2 gesonderte Bereichsrechner BR1 und BR2 vorgesehen. Diese sind signaltechnisch sicher ausgeführt; sie bestehen aus jeweils mindestens zwei Einzelrechnern, die sich laufend auf Übereinstimmung vergleichen und im Falle von Verarbeitungsfehlern abschalten. Die Bereichsrechner wirken über ihnen zugeordnete Stellrechner SR1 und SR2 bzw. SR3 und SR4 sowie diesen nachgeordnete Anpassungen A auf die Elemente der Aussenanlage ein und empfangen von diesen Meldungen über den Ist-Zustand dieser Elemente. Den Stellrechnern, die ebenfalls signaltechnisch sicher ausgeführt sind, obliegt neben der Steuerung und Überwachung der Aussenelemente auch deren Funktionsprüfung durch Ausgabe von Prüfkommandos und Auswertung von Rückmeldungen.

Die Bereichsrechner sind die Verarbeitungseinheiten für die eigentliche Stellwerkslogik. Jeder Bereichsrechner beinhaltet die Bearbeitungsprogramme für alle möglichen Elementtypen, unabhängig davon, ob diese in dem zu steuernden Teilbereich überhaupt vorhanden sind oder nicht. Ein Elementtyp wird dabei durch alle gleichartigen Fahrwegelemente wie z.B. Elementtyp «Weiche» für alle Weichen gebildet. Diese Bearbeitungsprogramme sind sowohl bahnverwaltungsspezifisch als auch aufgabenspezifisch. Zu den bahnverwaltungsspezifischen Programmen gehört beispielsweise die Festlegung bestimmter Fahrstrassenüberwachungs- und Auflöseprozeduren, zu den aufgabenspezifischen Programmen beispielsweise die rechnerinterne Ermittlung der jeweils benachbarten Fahrwegelemente, die Signalbegriffswahl u.ä. Diese Programme sind im Programmspeicher der Bereichsrechner, einen ROM oder einen E-PROM, unverlierbar abgespeichert. Mit diesem Programm allein sind die Bereichsrechner aber noch nicht in der Lage, die zugeordnete Bahnhofsanlage zu steuern. Der Grund dafür liegt darin, dass sie vor Inbetriebnahme noch keine Kenntnis über die zu steuernde Bahnanlage, d.h. die Aufeinanderfolge der Fahrwegelemente und die Kennzeichnung der einzelnen Elemente besitzen. Dies wird ihnen erst in einer dem Betrieb vorangehenden Aufrüstphase von einem gesonderten Rechner, dem Eingaberechner ER, übermittelt.

Dieser Eingaberechner ER beinhaltet in seinen Speicherschaltmitteln eine sogenannte Bahnhofsdatenliste. Diese Liste ist das Ergebnis der Projektierungsphase der Anlage und enthält alle anlagenspezifischen Daten wie z.B. Aussagen über die Gleistopographie, die Aufteilung der Bahnanlage in einzelne Teilbereiche, unterschiedliche Elementprogrammfälle und weitere elementspezifische Daten. Die Gleistopographie beinhaltet neben der reinen Aufeinanderfolge bestimmter Fahrwegelemente die Zuordnung von genau definierten Strangkennzeichen zu diesen Fahrwegelementen und die Kenntnis der an die einzelnen Stränge der Fahrwegelemente angrenzenden Stränge der benachbarten Fahrwegelemente. Hierdurch ist eine fahrrichtungsabhängige Behandlung der einzelnen Fahrwegelemente im Rechner und auch eine Behandlung dieser Elemente bei Fahrwegverzweigungen möglich. Die Bereichsaufteilung besagt, welche Fahrwegelemente in welcher Konfiguration welchem Bereichsrechner zugeordnet sind. Unter dem Begriff Elementprogrammfälle sind z.B. besondere Behandlungsprozeduren für die einzelnen Fahrwegelemente zu verstehen, beispielsweise wenn eine Weiche Zwieschutz geben soll, in nicht beanspruchtem Zustand eine Vorzugslage einnehmen soll oder wenn sie nicht profilfrei isoliert ist, was ggf. Auswirkungen auf die Freimeldung des Weichenbereiches haben kann. Zu den elementspezifischen Daten gehören auch z.B. Angaben über die Längen einzelner Gleisabschnitte und die Zuordnung bestimmter Höchstgeschwindigkeiten zu einzelnen Gleisabschnitten oder Streckenbereichen. Der Eingaberechner hat darüberhinaus auch die Aufgabe, für die Darstellung der zu steuernden Anlage im Stellwerk eine Lupenaufteilung der Anlage für die gezielte Darstellung eines bestimmten Teilbereiches auf einem Sichtschirm vorzunehmen. Dieser Teilbereich muss nicht unbedingt einem der in Figur 1 definierten Teilbereiche entsprechen. Weiterhin hat der Eingaberechner die Aufgabe, die ihm beispielsweise von einem Fahrdienstleiter über eine Kommandoeingabe T zugeführten Kommandos auf Sinnfälligkeit zu überprüfen. Hierzu erstellte der Eingaberechner aus der Eingabe, beispielsweise einem Kommando zur Fahrstrasseneinstellung, einen Auftrag auf Zulässigkeitsprüfung. Diese beginnt beim Zielelement der zu bildenden Fahrstrassen und führt über die Nachbarschaftsadressenermittlung bis hin zum Startelement der Fahrstrasse. Dabei wird die Zulassung der Fahrstrasse überprüft, d.h. festgestellt, ob die einzelnen Fahrwegelemente für die Bildung einer Fahrstrasse verfügbar sind oder nicht. Bei positivem Ergebnis der Prüfung sendet der Eingaberechner an den Bereichsrechner, dem das Zielelement der Fahrstrasse zugeordnet ist, ein Telegramm mit dem Auftrag zur Fahrstrassenanschaltung. Dies geschieht über ein die Rechner untereinander verbindendes Bussystem B. Das Auftragstelegramm zur Fahrstrassenanschaltung wird nun von dem oder den Bereichsrechnern von Element zu Element weitergegeben und setzt in den den einzelnen Fahrwegelementen zugeordneten Speicherschaltmitteln der Bereichsrechner entsprechende Sollmarkierungen, z.B. die Kennzeichnung einer Zielbeanspruchung. Vom Startelement der zu bildenden Fahrstrasse her wird der Durchlauf der Fahrstrassenanschaltung an den Eingaberechner gemeldet; dieser kann jetzt ggf. eine weitere Zulassungsprüfung für eine andere Fahrstrasse veranlassen.

Die weiteren Phasen der Elementbehandlung laufen nur noch auf Bereichsrechnerebene und der nachgeordneten Stellenrechnerebene ab. Sie werden ausgelöst durch einige in der Anschaltphase gesetzte Sollmarkierungen. Erkennt ein Bereichsrechner die Notwendigkeit des Stellens eines Aussenelementes, z.B. der Umstellung einer Weiche oder der Signalstellung, so gibt er einen Stellauftrag für das entsprechende Element an den zugehörigen Stellrechner aus. Der Stellvorgang selbst wird vom Stellrechner gesteuert und überwacht. Der Ist-Zustand der Aussenanlage wird von den Stellrechnern zyklisch abgefragt und dem jeweils zugehörigen Bereichsrechner übermittelt. Der Bereichsrechner ergänzt diese Meldungen um bereichsrechnerinterne Meldebits und übermittelt die Element-Ist-Zustände an den Eingaberechner ER zur Protokollierung über einen Drucker D und an einen Anzeigerechner AR. Dieser Anzeigerechner dient der Darstellung der zu steuernden Anlage auf einem Farbsichtgerät FS sowie zur Darstellung des Betriebsgeschehens, d.h. zur Kennzeichnung von Weichenlagen, Gleisbesetzungen, Fahrstrassenbeanspruchungen usw. Der Anzeigerechner AR aktualisiert aus den ihm von den Bereichsrechnern zugeführten Meldetelegrammen zyklisch das Meldebild des Farbsichtgerätes FS. Aufgabe eines gesonderten Schnittstellenrechners SR ist es, die vorhandenen Daten für die Zuglenkung und die Fernsteuerung aufzuarbeiten und zur Verfügung zu stellen.

Ist eine Änderung der Bahnhofstopographie oder eine Änderung elementspezifischer Daten erforderlich, so ist hierzu nicht auf die Festwertspeicher der Bereichsrechner einzuwirken, was – wie bereits eingangs erläutert wurde – zu einem erheblichen Prüfaufwand führen würde. Vielmehr braucht in diesem Falle lediglich der die Bahnhofstopographie und die elementspezifischen Daten beinhaltende Festwertspeicher des Eingaberechners gegen einen entsprechend aktualisierten Speicherbaustein ausgewechselt zu werden. Dieser Speicherbaustein kann vor dem Auswechseln auf die in ihm gespeicherten Daten hin geprüft werden. Der Eingaberechner übermittelt dann in einer dem Wiederinbetriebgehen der Stellwerksanlage vorausgehenden Aufrüstphase die in ihm gespeicherten Daten bereichsweise auf die einzelnen Bereichsrechner, die mit der Übernahme dieser Daten wieder den Betrieb aufnehmen können.

Die Vorteile, die sich durch die Abspeicherung der topographischen und elementspezifischen Daten in den Festwertspeichern nur eines einzigen Rechners darstellen, zeigen sich auch ganz besonders deutlich, wenn der Stellwerksanlage neben der für die Steuerung der einzelnen Teilbereiche erforderlichen Bereichsrechnern aus Redundanzgründen ein Ersatzbereichsrechner EBR beigeordnet ist. Fällt nämlich einer der Bereichsrechner aus irgend einem Grunde aus, so kann der Eingaberechner die zuvor an diesen übermittelten Daten nunmehr an den Ersatzbereichsrechner EBR übermitteln, und der Ersatzbereichsrechner ist sofort in der Lage, im Verbund mit dem oder den noch aktiven übrigen Bereichsrechnern die Stellwerkssteuerung vorzunehmen. Die rasche Inbetriebnahme dieses Ersatzbereichsrechners ist nur möglich, weil die für seinen Betrieb erforderliche topographischen und elementspezifischen Daten in einem Speicherbaustein ausserhalb des nicht mehr funktionsfähigen Bereichsrechners gespeichert sind und von dort her mühelos an ihn überspielt werden können. Die Bereichsrechner selbst sind baugleich ausgeführt und beinhalten vor Ablauf der Aufrüstphase die gleichen, sich auf die Elementbehandlung beziehenden Programme. Das Aufrüsten oder Wiederaufrüsten eines Bereichsrechners ist aber nicht nur bei Änderung anlagenspezifischer oder elementspezifischer Daten oder bei Änderung der Anlagenaufteilung erforderlich, sondern beispielsweise auch dann, wenn die Stromversorgung eines Rechners vorübergehend ausgefallen ist. Dann nämlich sind die in seinem Schreib-/Lesespeicher gespeicherten Daten über den von ihm zu steuernden Teilbereich der Anlage verlorengegangen und müssen erneut über den Eingaberechner eingeschrieben werden.

Die erfindungsgemässe Einrichtung zum Betrieb eines rechnergesteuerten Stellwerkes ist unabhängig von der Grösse der zu steuernden Stellwerksanlage und auch unabhängig davon, wie weit die Funktionsaufteilung in der für alle Bereichsrechner gemeinsam übergeordneten Rechnerebene untergliedert ist, d.h., ob wie im vorliegenden Beispiel dort drei Rechner vorhanden oder mehr oder weniger Rechner mit Vorteil anzuwenden sind.

**Patentansprüche**

1. Einrichtung zum Betrieb eines rechnergesteuerten Stellwerkes für eine in Teilbereiche unterteilte Bahnhofsanlage, bei dem für die Steuerung der den einzelnen Teilbereichen zugeordneten Fahrwegelemente je ein gesonderter signaltechnisch sicherer Rechner (Bereichsrechner) vorgesehen ist, dessen Programmspeicher die durch Einzel- und Fahrstrassenbeanspruchungen verlangten Bearbeitungsprogramme für alle Elementtypen beinhalten, dadurch gekennzeichnet, dass für die anlagenspezifische Kennzeichnung der innerhalb des jeweiligen Teilbereiches zu behandelnden Fahrwegelemente die Schreib-/Lesespeicher des betreffenden Bereichsrechners (RB1, RB2) vorgesehen sind und dass allen Bereichsrechnern gemeinsam ein ebenfalls signaltechnisch sicher ausgeführter Rechner (Eingaberechner ER) übergeordnet ist, in dessen Speichern alle anlagenspezifischen Daten unverlierbar gespeichert sind und der den Bereichsrechnern in einer dem Betrieb jeweils vorausgehenden Aufrüstphase die von ihm für den betreffenden Teilbereich gespeicherten anlagenspezifischen Daten übermittelt.

2. Einrichtung nach Anspruch 1, dadurch gekennzeichnet, dass jeder Bereichsrechner bei Erkennen eines Verarbeitungsfehlers bzw. bei Unterbrechung seiner Energieversorgung sich selbst abschaltet und dass die spätere Wiederanschaltung des Rechners von der vorherigen Durchführung einer Aufrüstphase abhängig gemacht ist.

3. Einrichtung nach Anspruch 1, dadurch gekennzeichnet, dass in dem Eingaberechner bei Änderung der Bahnhofstopographie bzw. der elementspezifischen Daten ein die Änderung berücksichtigender Festwertspeicher gegen den bislang verwendeten, die bisher gültigen Daten beinhaltenden Festwertspeicher auszutauschen ist und dass die Übernahme der neuen Daten in die Bereichsrechner durch eine dem Betrieb vorausgehende Aufrüstphase erfolgt.

4. Einrichtung nach Anspruch 1 oder 2, dadurch gekennzeichnet, dass neben den für die Steuerung der in Teilbereiche unterteilten Bahnanlage vorgesehenen Bereichsrechnern mindestens ein weiterer Bereichsrechner vorgesehen ist, der bei Ausfall eines der aktiven Bereichsrechner vom Eingaberechner her mit den für diesen Bereichsrechner geltenden Daten zu versorgen ist.

## Claims

1. A device for operating a computer-controlled signalling device for a station system which is sub-divided into subsidiary areas, where, for the control of the track elements assigned to the individual subsidiary areas, a separate computer (area computer), protected by signalling technology, is provided, the programme stores of which contain the processing programmes, needed as a result of individual- and track requirements, for all element types, characterised in that the write-/read stores of the respective area computer (RB1, RB2) are provided for the system-specific characterisation of the track elements which are to be dealt with within the respective subsidiary area, and that all the area computers are commonly assigned a superordinate computer (ER), which is likewise protected by signalling technology, and the stores of which permanently store all the items of system-specific data, and which supplies the area computers, in a setting-up phase which always precedes operation, with the items of system-specific data which are stored therein for the respective subsidiary area.

2. A device as claimed in claim 1, characterised in that on the recognition of a processing error or in the event of an interruption in its energy supply, each area computer is automatically disconnected, and that the later re-connection of the computer is rendered dependent upon the previous execution of a setting-up phase.

3. A device as claimed in claim 1, characterised in that in the input computer, in the event of a change in the station topography or the element-specific data, a read-only store, which takes the change into consideration, is to be exchanged for the previously-used read-only store which contains the previously-valid data, and that the transfer of the new data items into the area computers takes place as a result of a setting-up phase which precedes operation.

4. A device as claimed in claim 1 or claim 2, characterised in that in addition to the area computers provided for controlling the station system which is sub-divided into subsidiary areas, at least one further area computer is provided which, in the event of the failure of one of the active area computers, is to be supplied by the input computer with the data valid for this area computer.

## Revendications

1. Dispositif d'exploitation d'un poste d'aiguillage piloté par ordinateur pour une installation de gare subdivisée en zones partielles, et dans lequel pour la commande d'éléments d'itinéraire associés aux différentes zones partielles, il est prévu respectivement un ordinateur particulier sûr du point de vue de la technique de transmission des signaux (ordinateur de zone), dont les mémoires de programmes contiennent les programmes de traitement, dont l'emploi est nécessité par les contraintes individuelles et les charges des voies de déplacement, pour tous les types d'éléments, caractérisé par le fait que les mémoires d'enregistrement/lecture de l'ordinateur de zone considéré (RB1, RB2) sont prévues pour la caractérisation, spécifique pour l'installation, des éléments d'itinéraire devant être traités à l'intérieur de la zone partielle considérée, et qu'un ordinateur (ordinateur d'entrée ER), qui est réalisé également d'une manière sûre du point de vue de la technique de transmission des signaux, est prévu en commun de manière à avoir une commande prioritaire sur tous les autres ordinateurs de zones, toutes les données spécifiques à l'installation étant mémorisées d'une manière imperdable dans les mémoires de cet ordinateur, qui retransmet les données spécifiques à l'installation, qui sont mémorisées pour la zone partielle considérée, aux ordinateurs de zones, dans une phase de réglage qui précède respectivement le fonctionnement.

2. Dispositif suivant la revendication 1, caractérisé par le fait que chaque ordinateur de zone

se débranche de lui-même lors de l'identification d'une erreur de traitement ou dans le cas d'une interruption de son alimentation en énergie et que le rebranchement ultérieur de l'ordinateur s'effectue en fonction de l'exécution préalable d'une phase de réglage.

3. Dispositif suivant la revendication 1, caractérisé par le fait que dans le cas d'un changement de la topographie de la gare ou des données spécifiques aux éléments, il faut remplacer la mémoire morte utilisée jusqu'alors et contenant les données valables jusqu'alors, par une mémoire morte tenant compte du changement, et que le transfert des nouvelles données dans l'ordinateur de zone s'effectue au moyen d'une phase de réglage qui précède le fonctionnement.

4. Dispositif suivant la revendication 1 ou 2, caractérisé par le fait qu'en dehors des ordinateurs de zones prévus pour la commande de l'installation ferroviaire subdivisée en zones partielles, il est prévu au moins un autre ordinateur de zone qui, lors de la défaillance de l'un des ordinateurs de zones actifs, doit être alimenté à partir de l'ordinateur d'entrée, par les données valables pour cet ordinateur de zone.

0 132 548

## FIG 1

BEREICH 1

BEREICH 2

L

## FIG 2

D

FS

ER

AR

SR

B

BR 1

BR 2

EBR

B

SR1  SR2  SR3  SR4

A      A

7